# EUROPÄISCHE PATENTSCHRIFT

(11) **EP 3 875 751 B1**
(45) Veröffentlichungstag und Bekanntmachung des Hinweises auf die Patenterteilung: **01.05.2024**
(21) Anmeldenummer: 20160359.4
(22) Anmeldetag: 02.03.2020
(51) Int. Cl.: F03D 1/06

(54) **ROTORBLATT FÜR EINE WINDENERGIEANLAGE UND ROTORBLATTSPITZE**
ROTOR BLADE FOR A WIND ENERGY SYSTEM AND ROTOR BLADE TIP
PALE DE ROTOR POUR UNE ÉOLIENNE ET POINTE DE PALE DE ROTOR

(43) Veröffentlichungstag der Anmeldung: 08.09.2021
(73) Patentinhaber: Nordex Energy SE & Co. KG, 22419 Hamburg (DE)
(72) Erfinder: Ohlerich, Nick, 18055 Rostock (DE); Doosttalab, Mehdi, 22850 Norderstedt (DE); Rautmann, Christof, 22419 Hamburg (DE)
(74) Vertreter: Epping - Hermann - Fischer

(56) Entgegenhaltungen:
- US-A1- 2011 103 963
- US-A1- 2017 335 830

## Beschreibung

Die Erfindung betrifft ein Rotorblatt für eine Windenergieanlage, welches einen Rotorblatthauptkörper und eine Rotorblattspitze aufweist. Die Erfindung betrifft auch eine derartige Rotorblattspitze.

Aktuelle Trends in der Windenergiebranche führen zu immer längeren Rotorblättern, beispielsweise Rotorblättern mit über 80 m Länge. Die Rotorblätter werden aus Faserverbundwerkstoffen hergestellt und sind innen hohl. Innerhalb dieser Hohlräume befinden sich entsprechend große Mengen an Luft. Das in der Luft gebundene Wasser kann unter entsprechenden Bedingungen, beispielsweise Temperaturänderungen et cetera, an der Innenseite der Rotorblätter kondensieren, was zu Wasseransammlungen im Rotorblatt führt. Dieses Wasser muss aus dem Rotorblatt abfließen können, um Folgeschäden zu vermeiden. Ein Problem besteht beispielsweise bei Blitzeinschlägen, wobei der kurzzeitig hohe Strom zu einer schlagartigen Verdampfung des kondensierten Wassers im Inneren des Rotorblatts führen kann. Der durch die Verdampfung aufgebaute Dampfdruck kann mechanische Schäden im Inneren des Rotorblattes bewirken.

Durch die Rotation des Rotorblatts im Betrieb der Windenergieanlage sammelt sich das Wasser aufgrund der Zentrifugalkraft (Fliehkraft) typischerweise im Bereich der Blattspitze. Eine mögliche Lösung, das Wasser im Bereich der Blattspitze abzuführen, ist eine typischerweise in einem Winkel zur Pitchachse eingebrachte Drainage-Bohrung. Die Bohrung erstreckt sich durch das Laminat und/oder durch einen metallischen Blattspitzenrezeptor bis zur Endkante des Rotorblattes. Das Rotorblatt weist im Bereich der Blattspitze nur noch eine geringe Profildicke auf. Dadurch ist der Durchmesser der Drainagebohrung begrenzt mit dem Nachteil, dass sich im Blattbereich vor der Bohrung Verschmutzungen, z.B. Fertigungsrückstände, Klebereste ansammeln können, welche die relativ kleine Bohrung verstopfen, so daß Wasser nicht zuverlässig abfließen kann. Außerdem kann sich je nach Temperatur und Luftdruck ein Unterdruck im Blatt bilden, der es schwer macht die Einstiegsluken an der Blattwurzel zu öffnen bzw. diese sogar beschädigen.

Die US20110103963A1 betrifft ein Verfahren zur Herstellung eines Rotorblatts für eine Windkraftanlage, das im Bereich der Rotorblattspitze eine Entwässerungsbohrung aufweist, ein Rotorblatt für eine Windkraftanlage mit einer Entwässerungsbohrung im Bereich der Rotorblattspitze, eine Windkraftanlage mit einem entsprechenden Rotorblatt und die Verwendung eines Flächenelements in einem Rotorblatt für eine Windkraftanlage, das im Bereich der Rotorblattspitze eine Entwässerungsbohrung aufweist.

Die US 2017/0335830 A1 betrifft einen Blitzrezeptor für ein Rotorblatt einer Windkraftanlage, wobei der Blitzrezeptor einteilig in einem Gießverfahren hergestellt wird.

Eine Aufgabe, die der Erfindung zugrunde liegt, ist es, ein Konzept für ein Rotorblatt anzugeben, welches zu einem besonders wirkungsvollen Ableiten von Wasser aus einem Rotorblatt beiträgt.

Es wird ein Rotorblatt für eine Windenergieanlage offenbart. Das Rotorblatt weist einen Rotorblatthauptkörper auf, der einen Rotorblatthohlraum begrenzt. Der Rotorblatthauptkörper ist beispielsweise durch zwei Halbschalen aus Faserverbundwerkstoff gebildet, die entlang der Nasenkante und der Endkante miteinander fest verbunden sind. Das Rotorblatt weist eine Rotorblattspitze auf, die mit dem Rotorblatthauptkörper fest verbunden ist. Dabei können der Rotorblatthauptkörper und die Rotorblattspitze einteilig gefertigt sein, beispielsweise aus einem Faserverbundwerkstoff. Alternativ können der Rotorblatthauptkörper aus einem Faserverbundwerkstoff und die Rotorblattspitze aus einem stromleitenden, beispielsweise metallischen, Werkstoff gefertigt sein und der Rotorblatthauptkörper wird mit der Rotorblattspitze mittels einer Klebverbindung fest verbunden. Die Rotorblattspitze weist eine Drainagebohrung auf, die fluidisch mit dem Rotorblatthohlraum gekoppelt ist. Die Drainagebohrung ist zu einer saugseitigen Oberfläche der Rotorblattspitze hin geöffnet, sodass mittels der Drainagebohrung Fluid, insbesondere Wasser, aus dem Rotorblatthohlraum an der saugseitigen Oberfläche der Rotorblattspitze nach außen abgeführt werden kann. Die Bohrungsmittelachse der Drainagebohrung ist derart bezüglich der Pitchachse geneigt, dass die Bohrungsmittelachse aus Richtung einer druckseitigen Oberfläche in Richtung der saugseitigen Oberfläche der Rotorblattspitze verläuft. Die Bohrungsmittelachse der Drainagebohrung verläuft ferner unter einem bestimmten Winkel bezüglich der Pitchachse des Rotorblatts in Richtung eines spitzenseitigen Endes der Rotorblattspitze. Unter einer Drainagebohrung im Sinne der Erfindung sind sowohl eine sich gerade erstreckende Bohrung als auch ein durch ein anderes Fertigungsverfahren hergestellter Kanal zu verstehen, der einen geradlinigen oder auch leicht gebogenen Verlauf aufweisen kann.

Bei dem beschriebenen Rotorblatt ist vorgesehen, dass die Drainagebohrung den Rotorblatthohlraum fluidisch mit der saugseitigen Oberfläche der Rotorblattschale verbindet, sodass kondensiertes Wasser aus dem Rotorblatthohlraum direkt über die Blattspitze nach außen abgeleitet werden kann. Eine Eintrittsöffnung der Drainagebohrung ist dem Rotorblatthohlraum zugewandt, während eine Austrittsöffnung der Drainagebohrung an der Saugseite (saugseitigen Oberfläche) der Rotorblattspitze angeordnet ist. Mit anderen Worten ist die Drainagebohrung einerseits zum Rotorblatthohlraum und andererseits zur Saugseite hin geöffnet. Bei der Drainagebohrung handelt es sich beispielsweise um eine einfache, einzelne geradlinige Bohrung.

Durch die beschriebene Drainagebohrung, wird ein besonders effektives und effizientes Ableiten von Wasser aus dem Rotorblatt ermöglicht. Insbesondere mittels deren Positionierung und deren Austritt auf der Saugseite wird ermöglicht, dass während des Betriebs des Rotorblattes im Bereich eines Unterdrucks aktiv Luft aus dem Blattinneren gesaugt wird. Dies trägt erheblich zu einer verbesserten Entwässerung des Rotorblattes bei. Weiter wird das aerodynamische Profil der Blattspitze nicht oder nur unwesentlich negativ beeinflusst. Weiterhin wird dazu beigetragen, Kostennachteile aufgrund von Folgeschäden des Wassereintrags im Blattinneren zu vermeiden. Weiterhin wird ermöglicht, die Bohrung mit größerem Durchmesser auszuführen, da sie sich durch einen Bereich des Profilquerschnitts erstreckt, in dem dieses eine ausreichende Dicke aufweist. Ein Verstopfen der Bohrung kann somit reduziert oder sogar verhindert werden. Dadurch können Kosteneinsparungen durch das Vermeiden von Servicearbeiten (Freibohren) erreicht werden.

Aufgrund der Ausführung als einfache, gerade verlaufende Bohrung sind keine weiteren (An-)Bohrungen notwendig, so dass das Wasser geradlinig ausgeleitet werden kann. Dies trägt zu vereinfachten bzw. verringerten Servicearbeiten bei, da ein einfaches Freibohren der Drainagebohrung ermöglicht wird. Ein winkliger Verlauf der Drainagebohrung oder eines Drainagekanals bis zum Austritt aus der Blattspitze wird dadurch vermieden, welcher eine Verstopfungsneigung der Bohrung bzw. des Kanals bzw. einen Servicebedarf erhöhen würde.

Bevorzugt ist die Rotorblattspitze ein separates Bauteil des Rotorblatts. Die Rotorblattspitze ist beispielsweise stromleitend ausgebildet. Beispielsweise ist die Rotorblattspitze aus Aluminium gefertigt, wobei auch Mehrkomponentenaufbauten aus Metall, Fasermaterial und nichtstromleitendenden Materialien denkbar ist. Die Rotorblattspitze ist optional als Blitzschutzeinrichtung, etwa als sogenannter Rezeptor, ausgebildet. Die Rotorblattspitze wird typischerweise im Fertigungsprozess des Rotorblattes mit der Saug- und Druckseite des Rotorblattes verbunden, insbesondere zwischen die beiden Blattschalen verklebt bzw. einlaminiert.

Erfindungsgemäß ist eine Bohrungsmittelachse der Drainagebohrung derart bezüglich der Pitchachse geneigt, dass die Bohrungsmittelachse aus Richtung einer druckseitigen Oberfläche in Richtung der saugseitigen Oberfläche der Rotorblattspitze verläuft. Mit anderen Worten verläuft die Bohrungsmittelachse geneigt bzgl. einer Haupterstreckungsebene oder Mittelebene der Rotorblattspitze. Auch dies trägt dazu bei, dass Wasser besonders effektiv abgeleitet werden kann.

Erfindungsgemäß verläuft eine Bohrungsmittelachse der Drainagebohrung unter einem bestimmten Winkel bezüglich einer Pitchachse des Rotorblattes in Richtung eines spitzenseitigen Endes der Rotorblattspitze. Bei der Pitchachse des Rotorblattes handelt es sich um die Achse, um die das Rotorblatt gedreht werden kann. Dadurch wird ein Anströmwinkel für das Rotorblatt im Betrieb eingestellt. Insbesondere verläuft die Bohrungsmittelachse und damit die Drainagebohrung nicht parallel zur Pitchachse. Die Drainagebohrung erstreckt sich in Richtung der Profilendkante, d.h. die Bohrungsmittelachse zeigt in Richtung der Profilendkante. Durch die Ausrichtung der Bohrungsmittelachse wird ein senkrechtes Überströmen der Drainagebohrung und damit eine aeroakustische Resonanz verhindert. Auch dies trägt zu einem Kostenvorteil bei.

Der vorbestimmte Winkel liegt beispielsweise in einem Intervall von 1° bis 45°, bevorzugt 1° bis 15°. Dies stellt ein Optimum für die oben genannten Vorteile und Funktionen dar.

Gemäß einer Ausführungsform ist die Drainagebohrung derart ausgebildet, dass sie nur von der Saugseite aus zugänglich ist. Dies hat den Vorteil, dass die Profilendkante der Rotorblattspitze (Hinterkante), anders als bei aus dem Stand der Technik bekannten Lösungen, einen geschlossenen, stetigen Verlauf aufweist. Dies ermöglicht ein besonders effektives aerodynamisches Profil an der Rotorblattspitze und trägt erheblich im positiven Sinne zu den aerodynamischen Eigenschaften der Rotorblattspitze und somit des Rotorblattes bei, wobei insbesondere die akustischen Eigenschaften optimiert sind. Insbesondere kann die Hinterkante der Blattspitze besonders dünn ausgeführt werden. Auch kann die Windenergieanlage mit einem solchen Rotorblatt in einem besonders leistungsstarken Modus betrieben werden.

Gemäß einer Ausführungsform ist die Drainagebohrung in gerader Verlängerung ihrer Bohrungsmittelachse frei von außen zugänglich. Dies trägt analog zu oben dazu bei, dass Wartungsarbeiten an der Bohrung einfach möglich sind. Insbesondere kann eine durch Verschmutzung zugesetzte Bohrung leicht wieder freigebohrt werden. Die Bohrung ist somit für Wartungsarbeiten von außen direkt zugänglich.

Gemäß einer Ausführungsform weist die saugseitige Oberfläche der Rotorblattspitze im Bereich einer Austrittsöffnung der Drainagebohrung eine Vertiefung auf. Dies trägt wiederum zur verbesserten Zugänglichkeit der Bohrung von außen bei. Durch die Vertiefung wird darüber hinaus dazu beigetragen, besonders gute aerodynamische und aeroakustische Eigenschaften der Rotorblattspitze zu gewährleisten. Bei der Vertiefung handelt es sich beispielsweise um eine in die Blattspitze eingebrachte Rinne oder Mulde, die sich in Verlängerung der Bohrung erstreckt. Allgemein ausgedrückt verläuft die Drainagebohrung in einem Bereich des Blattes mit ausreichender Profildicke und mündet bzw. öffnet auf der Saugseite in die Vertiefung. In diesem Bereich der Vertiefung ist immer noch eine "Restprofildicke" vorhanden, so dass die Druckseite geschlossen verbleibt.

Gemäß einer Ausführungsform ist die Vertiefung derart ausgebildet, dass die Drainagebohrung in gerader Verlängerung ihrer Bohrungsmittelachse der Drainagebohrung frei von außen zugänglich ist, d.h. beim Austritt der Bohrung nach Außen mündet die Bohrung in eine ebene, plane Fläche. Dadurch vereinfachen sich die Fertigung sowie die Wartung, da beispielsweise ein Bohrer besser angesetzt werden kann.

Gemäß einer Ausführungsform ist die Vertiefung derart ausgebildet, dass die saugseitige Oberfläche in einer Richtung senkrecht zu der Bohrungsmittelachse einen im Wesentlichen stetigen Konturverlauf aufweist. Mit anderen Worten ist die Vertiefung entlang der Bohrungsmittelachse kanten- und/oder stufenfrei ausgebildet, beispielsweise abgerundet. Mit anderen Worten weist die Vertiefung keine Kanten quer zu einer Luftströmung des Rotorblatts im Betrieb auf. Dies trägt besonders zu einem optimalen Strömungsverlauf bei, wobei die aerodynamischen und aeroakustischen Eigenschaften optimiert sind.

Gemäß einer Ausführungsform ist ein Durchmesser der Drainagebohrung 1 mm bis 20 mm groß, insbesondere liegt diese bei 8 mm, 9 mm oder 10 mm.

Gemäß einer Ausführungsform ist die Rotorblattspitze mit einer Blende versehen. Die Blende wird im Bereich der Vertiefung (Aussparung) aufgesetzt und ist für Wasser durchlässig. Sie weist an ihrer Außenseite eine der Rotorblattoberfläche angepasste Kontur auf, wodurch die Luftströmung an der Außenkontur noch weiter optimiert werden kann.

Gemäß einem weiteren Aspekt wird eine Rotorblattspitze für ein Rotorblatt einer Windenergieanlage offenbart. Die Rotorblattspitze ist ausgebildet, fest mit einem Rotorblatthauptkörper des Rotorblatts verbunden zu werden. Die Rotorblattspitze weist eine Drainagebohrung auf, die fluidisch mit dem Rotorblatthohlraum koppelbar ist und zu einer saugseitigen Oberfläche der Rotorblattspitze hin geöffnet ist, sodass mittels der Drainagebohrung Fluid aus dem Rotorblatthohlraum an der saugseitigen Oberfläche der Rotorblattspitze nach außen abgeführt werden kann. Eine Bohrungsmittelachse der Drainagebohrung ist derart bezüglich einer Pitchachse des Rotorblatts geneigt, dass die Bohrungsmittelachse aus Richtung einer druckseitigen Oberfläche in Richtung der saugseitigen Oberfläche der Rotorblattspitze verläuft. Die Bohrungsmittelachse verläuft der Drainagebohrung unter einem bestimmten Winkel bezüglich der Pitchachse des Rotorblatts in Richtung eines spitzenseitigen Endes der Rotorblattspitze.

Die Rotorblattspitze ermöglicht die oben genannten Vorteile und Funktionen. Die oben beschriebenen Weiterbildungen gelten analog für die Rotorblattspitze.

Weitere Vorteile, Merkmale und Weiterbildungen ergeben sich aus dem nachfolgenden, in Verbindung mit den Figuren erläuterten Ausführungsbeispiel. Gleiche, gleichartige oder gleich wirkende Elemente sind in den Figuren mit gleichen Bezugszeichen versehen. Aus Gründen der Übersichtlichkeit sind gegebenenfalls nicht alle beschriebenen Elemente in sämtlichen Figuren mit zugehörigen Bezugszeichen gekennzeichnet.

In den Figuren zeigen:
Figur 1 eine schematische Darstellung einer Windenergieanlage,
Figur 2 eine schematische, perspektivische Darstellung eines Rotorblatts und
Figuren 3 bis 5 verschiedene Ansichten einer Rotorblattspitze für ein Rotorblatt gemäß einem Ausführungsbeispiel der Erfindung.

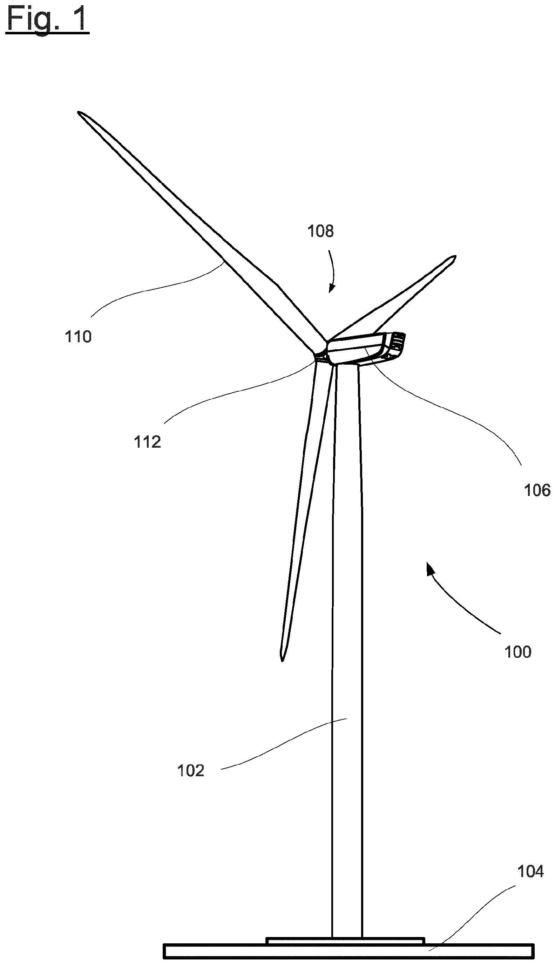

Figur 1 zeigt eine schematische Darstellung einer Windenergieanlage 100. Die Windenergieanlage 100 weist einen Turm 102 auf. Der Turm 102 ist mittels eines Fundaments 104 auf einem Untergrund befestigt. An einem dem Untergrund gegenüberliegenden Ende des Turms 102 ist eine Gondel 106 drehbar gelagert. Die Gondel 106 weist beispielsweise einen Generator auf, der über eine Rotorwelle (nicht gezeigt) mit einem Rotor 108 gekoppelt ist. Der Rotor 108 weist ein oder mehrere (Windenergieanlagen)Rotorblätter 110 auf, die an einer Rotornabe 112 angeordnet sind.

Der Rotor 108 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 108 in elektrische Energie um.

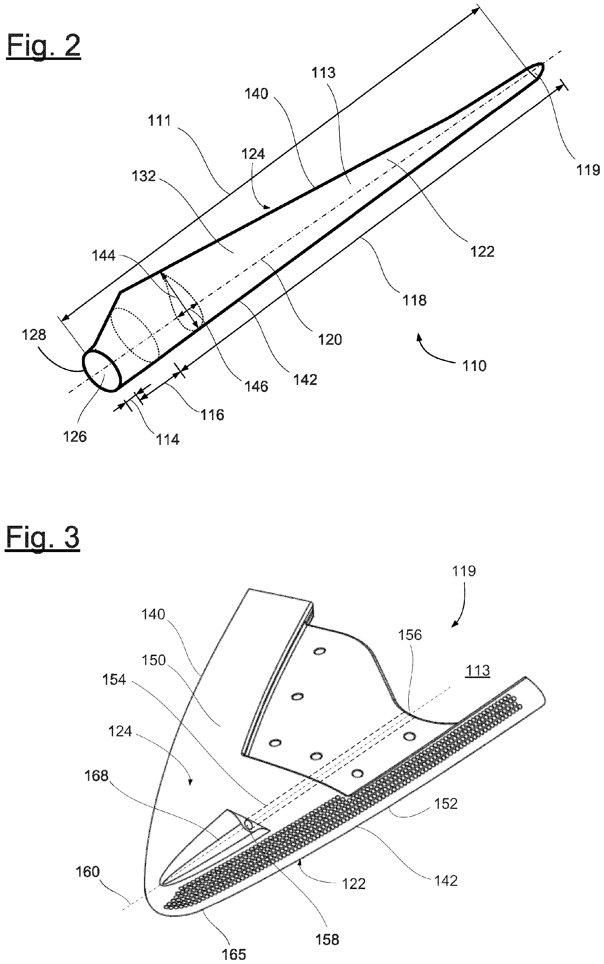

Figur 2 zeigt schematisch ein Rotorblatt 110. Das Rotorblatt 110 weist die Form eines herkömmlichen Rotorblattes auf und ist durch einen Rotorblatthauptkörper 111 sowie eine Rotorblattspitze 119 gebildet. Die Rotorblattspitze 119 ist als ein separates Element ausgeführt und aus einem Aluminiumwerkststoff gefertigt. Die Rotorblattspitze 119 ist über eine Klebverbindung fest mit dem Rotorblatthauptkörper 111 verbunden. Der Rotorblatthauptkörper 111 ist durch zwei miteinander verbundene Halbschalen aus Faserverbundwerkstoff gebildet und im Inneren im Wesentlichen hohl ausgebildet, wobei er einen Rotorblatthohlraum 113 begrenzt. Das Rotorblatt 110 hat einen Rotorblattwurzelbereich 114, der der Rotornabe 112 zugewandt ist. Der Rotorblattwurzelbereich 114 hat typischerweise einen im Wesentlichen kreisrunden Querschnitt. An den Rotorblattwurzelbereich 114 schließen sich ein Übergangsbereich 116 und ein Profilbereich 118 des Rotorblatts 110 an. Das Rotorblatt 110 hat bezüglich einer Längserstreckungsrichtung 120 eine Druckseite 122 und eine gegenüberliegende Saugseite 124. Im Rotorblattwurzelbereich 114 ist ein Rotorblattanschlussende 126 mit einem Flanschanschluss 128 vorgesehen, mittels welchem das Rotorblatt 110 mit einem Pitchlager oder einem Extender mechanisch verbunden wird.

Das Rotorblatt 110, d.h. sowohl der Rotorblatthauptkörper 111 als auch die Rotorblattspitze 119, hat eine Profilendkante 140 und eine Profilnasenkante 142. Eine Profiltiefe 144 ist als Abstand von der Profilendkante 140 zur Profilnasenkante 142 bezüglich eines Profilquerschnitts definiert. Eine Profildicke 146 ist als ein Abstand von der Druckseite 122 zur Saugseite 124 definiert, wobei im vorliegenden Kontext die maximale Profildicke eines Profilquerschnitts gemeint sein soll. Die Profildicke 146 wird rechtwinklig zur Längsachse 120 und zur Profiltiefe 144 gemessen. Ein (Profil-)Querschnitt liegt in einer Ebene normal zur Längsachse 120.

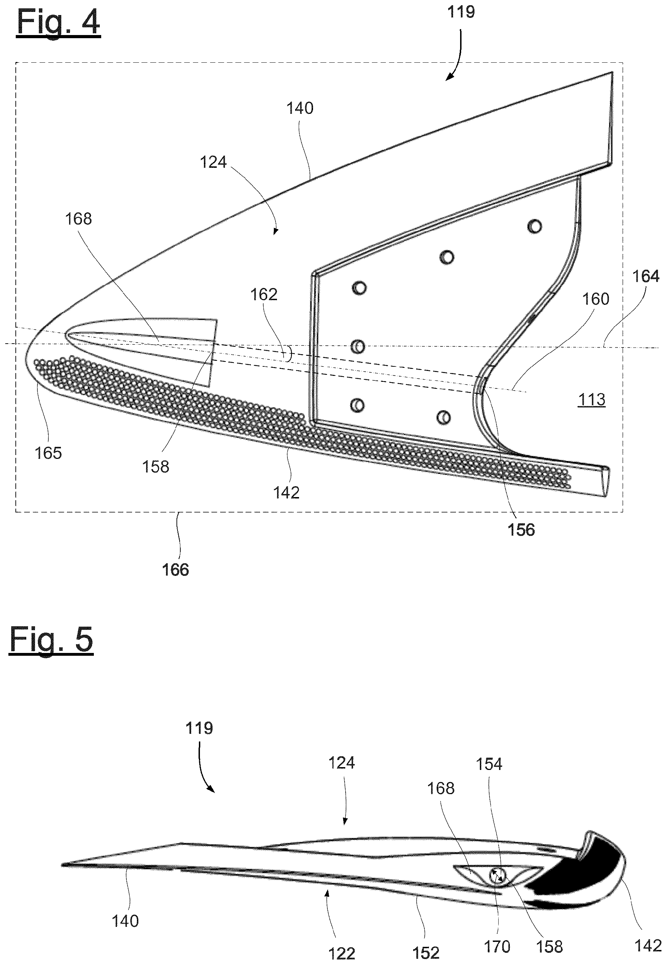

Im Folgenden wird im Detail auf eine Rotorblattspitze 119 gemäß einem Ausführungsbeispiel der Erfindung eingegangen, die anhand der Figuren 3 bis 5 beschrieben wird. Figur 3 zeigt eine perspektivische Ansicht mit Blick auf die Saugseite 124 der Rotorblattspitze 119, Figur 4 zeigt eine Ansicht mit Blick entlang der Rotorblattspitze 119 und Figur 5 zeigt eine Draufsicht auf die Saugseite 124 der Rotorblattspitze 119.

Die Rotorblattspitze 119 ist im Ausführungsbeispiel derart mit dem Rotorblatthauptkörper 111 verbunden, dass ein im Wesentlichen nahtloser Übergang vom Rotorblatthauptkörper 111 auf die Rotorblattspitze 119 hinsichtlich des aerodynamischen Profils (Außenkontur des Rotorblattes), d.h. die Profilend- und Profilnasenkante 140, 142 mit einbegriffen, gegeben ist. Die Rotorblattspitze 119 weist eine saugseitige Oberfläche 150 (der Saugseite 124) bzw. eine gegenüberliegende druckseitige Oberfläche 152 (der Druckseite 122) auf.

Die Rotorblattspitze 119 weist eine Drainagebohrung 154 auf, die sich ausgehend vom Rotorblatthohlraum 113 (in Figuren 3 und 4 angedeutet) zur saugseitigen Oberfläche 150 hin erstreckt. Eine Eintrittsöffnung 156 der Drainagebohrung 154 ist dem Rotorblatthohlraum 113 zugewandt, eine Austrittsöffnung 158 der Drainagebohrung 154 ist an der Saugseite 124 angeordnet. Die Drainagebohrung 154 ist nur zur saugseitigen Oberfläche 150 hin geöffnet. Die Drainagebohrung 154 hat im Ausführungsbeispiel einen Durchmesser 170 von 8 mm.

Die Drainagebohrung 154 weist eine Bohrungsmittelachse 160 auf, welche sich unter einem vorbestimmten, spitzen Winkel 162, der im Bereich von ca. 1° bis 10° liegt, von einer Pitchachse 164 erstreckt. Die Bohrungsmittelachse 160 liegt in einer Haupterstreckungsebene 166 in Richtung eines spitzenseitigen Endes 165 der Rotorblattspitze 119. Die Haupterstreckungsebene 166 ist beispielsweise ein Mittelebene der Blattspitze 119, entlang derer die Blattspitze die größte Ausdehnung aufweist, beispielsweise verglichen zu der deutlich geringen Ausdehnung in eine Dickenrichtung der Blattspitze 119. Wesentlich ist, dass die Bohrungsmittelachse 160 nicht mit der Pitchachse 164 zusammenfällt, so dass im Betrieb ein senkrechtes Überströmen der Drainagebohrung 154 verhindert wird. Die Drainagebohrung 154 verläuft beabstandet von Profilendkante 140 und Profilnasenkante 142 im Inneren der Rotorblattspitze 119.

Weiterhin ist die Drainagebohrung 154 leicht bezüglich der Pitchachse 164 geneigt, so dass die Bohrungsmittelachse 160 aus Richtung der druckseitigen Oberfläche 152 in Richtung der saugseitigen Oberfläche 150 der Rotorblattspitze 119 verläuft. Mit anderen Worten verläuft die Drainagebohrung 154 in einem Winkel zu der Haupterstreckungsebene 166 der Rotorblattspitze 119.

Weiterhin weist die saugseitige Oberfläche 150 in gerader Verlängerung der Bohrungsmittelachse 160 eine Vertiefung 168 auf. Die Vertiefung 168 schließt direkt an die Drainagebohrung 154 an und ist als eine Art Rinne oder Mulde ausgebildet. Die Vertiefung 168 schließt an die Austrittsöffnung 158 der Drainagebohrung 154 an. Die Vertiefung 168 ist derart ausgebildet, dass die Drainagebohrung 154 in gerader Verlängerung der Bohrungsmittelachse 160 frei von außen zugänglich ist. Die Vertiefung 168 ist dabei so geformt, dass diese in gerader Verlängerung der Bohrungsmittelachse 160 im Querschnitt mindestens dem Durchmesser 170 der Bohrung entspricht. Anders ausgedrückt stellt die Vertiefung 168 eine Art Auslauf der Drainagebohrung 154 dar, in den die Drainagebohrung 154 mündet.

Die Vertiefung 168 ist weiterhin so "harmonisch" ausgebildet, dass zumindest parallel zur Bohrungsmittelachse 160 keine Kanten oder Stufen vorgesehen sind. Die die Vertiefung 168 zur saugseitigen Oberfläche 150 hin begrenzenden Linien stellen lediglich Sichtkanten dar. Stattdessen weist die Vertiefung einen abgerundeten, stetigen Konturverlauf auf. Anders ausgedrückt ist die Vertiefung hinsichtlich der aerodynamischen Eigenschaften optimiert, wobei Verlaufssprünge und scharfe Kanten vermieden sind.

Die beschriebene Drainagebohrung 154 ist nicht zu Druckseite 122 hin geöffnet, so dass die druckseitige Oberfläche 152 nicht durch die Drainagebohrung 154 durchbrochen ist und eine geschlossene Oberfläche bilden kann. Die Drainagebohrung 154 ist nur über die Saugseite 124 zugänglich. Bei der Rotorblattspitze 119 ist weiterhin vorgesehen, dass die Profilnasenkante 142 und Profilendkante 140 einen im Wesentlichen geschlossenen, stetigen Verlauf haben. Insbesondere sind diese Kanten 140, 142 nicht durch die Drainagebohrung 154 durchbrochen.

Die beschriebene Rotorblattspitze 119 ermöglicht die eingangs genannten Vorteile und Funktionen. Insbesondere wird eine sehr effektive und kostengünstige Abführung von Fluid, insb. (Kondens-)Wasser, aus dem Rotorblatthohlraum 113 ermöglicht. Fluid, welches sich wie eingangs beschrieben im Rotorblatthohlraum 113 sammeln kann, wird über die Drainagebohrung 154 lediglich an der saugseitigen Oberfläche 150 nach außen abgeführt. Eine Wartung der Drainagebohrung 154 gestaltet sich sehr nutzerfreundlich und kostengünstig, da die Drainagebohrung 154 sehr gut zugänglich und einfach freigebohrt werden kann.

### BEZUGSZEICHENLISTE

- 100: Windenergieanlage
- 102: Turm
- 104: Fundament
- 106: Gondel
- 108: Rotor
- 110: Rotorblatt
- 111: Rotorblatthauptkörper
- 112: Rotornabe
- 113: Rotorblatthohlraum
- 114: Rotorblattwurzelbereich
- 116: Übergangsbereich
- 118: Profilbereich
- 119: Rotorblattspitze
- 120: Längserstreckungsrichtung
- 122: Druckseite
- 124: Saugseite
- 126: Rotorblattanschlussende
- 128: Flanschanschluss
- 140: Profilendkante
- 142: Profilnasenkante
- 144: Profiltiefe
- 146: Profildicke
- 150: saugseitige Oberfläche
- 152: druckseitige Oberfläche
- 154: Drainagebohrung
- 156: Eintrittsöffnung
- 158: Austrittsöffnung
- 160: Bohrungsmittelachse
- 162: vorbestimmter Winkel
- 164: Pitchachse
- 165: spitzenseitiges Ende
- 166: Haupterstreckungsebene
- 168: Vertiefung
- 170: Durchmesser

## Patentansprüche

1. Rotorblatt (110) für eine Windenergieanlage (100), aufweisend
- einen Rotorblatthauptkörper (111), der einen Rotorblatthohlraum (113) begrenzt, und
- eine Rotorblattspitze (119), die mit dem Rotorblatthauptkörper (111) fest verbunden ist, wobei die Rotorblattspitze (119) eine Drainagebohrung (154) aufweist, die fluidisch mit dem Rotorblatthohlraum (113) gekoppelt und zu einer saugseitigen Oberfläche (150) der Rotorblattspitze (119) hin geöffnet ist, so dass mittels der Drainagebohrung (154) Fluid aus dem Rotorblatthohlraum (113) an der saugseitigen Oberfläche (150) der Rotorblattspitze (119) nach außen abgeführt werden kann, wobei
- eine Bohrungsmittelachse (160) der Drainagebohrung (154) derart bezüglich einer Pitchachse (164) des Rotorblatts (110) geneigt ist, dass die Bohrungsmittelachse (160) aus Richtung einer druckseitigen Oberfläche (152) in Richtung der saugseitigen Oberfläche (150) der Rotorblattspitze (119) verläuft, **dadurch gekennzeichnet, dass** die Bohrungsmittelachse (160) der Drainagebohrung (154) unter einem bestimmten Winkel (162) bezüglich der Pitchachse (164) des Rotorblatts in Richtung eines spitzenseitigen Endes (165) der Rotorblattspitze (119) verläuft.

2. Rotorblatt (110) nach Anspruch 1, wobei die Drainagebohrung (154) derart ausgebildet ist, dass sie nur von der Saugseite (124) aus zugänglich ist.

3. Rotorblatt (110) nach Anspruch 1 oder 2, wobei eine druckseitige Oberfläche (152) der Rotorblattspitze (119) nicht durch die Drainagebohrung (154) geöffnet ist.

4. Rotorblatt (110) nach einem der vorhergehenden Ansprüche, wobei eine Profilendkante (140) der Rotorblattspitze (119) einen geschlossenen, stetigen Verlauf aufweist.

5. Rotorblatt (110) nach einem der vorhergehenden Ansprüche, wobei eine Profilnasenkante (142) der Rotorblattspitze (119) einen geschlossenen, stetigen Verlauf aufweist.

6. Rotorblatt (110) nach einem der vorhergehenden Ansprüche, wobei die Drainagebohrung (154) in gerader Verlängerung ihrer Bohrungsmittelachse (160) frei von außen zugänglich ist.

7. Rotorblatt (110) nach einem der vorhergehenden Ansprüche, wobei die saugseitige Oberfläche (150) der Rotorblattspitze (119) im Bereich einer Austrittsöffnung (158) der Drainagebohrung (154) eine Vertiefung aufweist.

8. Rotorblatt (110) nach Anspruch 7, wobei die Vertiefung derart ausgebildet ist, dass die Drainagebohrung (154) in gerader Verlängerung ihrer Bohrungsmittelachse (160) der Drainagebohrung (154) frei von außen zugänglich ist.

9. Rotorblatt (110) nach Anspruch 7 oder 8, wobei die Vertiefung derart ausgebildet ist, dass die saugseitige Oberfläche (150) in einer Richtung senkrecht zu der Bohrungsmittelachse (160) einen stetigen Konturverlauf aufweist.

10. Rotorblatt (110) nach einem der Ansprüche 1 bis 9, wobei der vorbestimmte Winkel in einem Intervall von 1° bis 45°, bevorzugt 1° bis 15° liegt.

11. Rotorblatt (110) nach einem der vorhergehenden Ansprüche, wobei ein Durchmesser (170) der Drainagebohrung (154) zwischen 1 mm bis 20 mm liegt, insbesondere 8 mm, 9 mm oder 10 mm ist.

12. Rotorblatt (110) nach einem der vorhergehenden Ansprüche, wobei die Rotorblattspitze (119) mit einer Blende versehen ist.

13. Rotorblattspitze (119) für ein Rotorblatt (110) einer Windenergieanlage (100), wobei die Rotorblattspitze (119) ausgebildet ist fest mit einem Rotorblatthauptkörper (111) des Rotorblatts (110) verbunden zu werden, und wobei die Rotorblattspitze (119) eine Drainagebohrung (154) aufweist, die fluidisch mit dem Rotorblatthohlraum (113) koppelbar ist und zu einer saugseitigen Oberfläche (150) der Rotorblattspitze (119) hin geöffnet ist, so dass mittels der Drainagebohrung (154) Fluid aus dem Rotorblatthohlraum (113) an der saugseitigen Oberfläche (150) der Rotorblattspitze (119) nach außen abgeführt werden kann, wobei
- eine Bohrungsmittelachse (160) der Drainagebohrung (154) derart bezüglich einer Pitchachse (164) des Rotorblatts (110) geneigt ist, dass die Bohrungsmittelachse (160) aus Richtung einer druckseitigen Oberfläche (152) in Richtung der saugseitigen Oberfläche (150) der Rotorblattspitze (119) verläuft, und
- die Bohrungsmittelachse (160) der Drainagebohrung (154) unter einem bestimmten Winkel (162) bezüglich der Pitchachse (164) des Rotorblatts in Richtung eines spitzenseitigen Endes (165) der Rotorblattspitze (119) verläuft.

## Claims

1. Rotor blade (110) for a wind turbine (100), having
- a rotor blade main body (111) delimiting a rotor blade cavity (113), and
- a rotor blade tip (119) firmly attached to the main body of the rotor blade (111), with the rotor blade tip (119) having a drainage hole (154) fluidically coupled to the rotor blade cavity (113) and open to a suction-side surface (150) of the rotor blade tip (119), so that fluid can be discharged from the rotor blade cavity (113) on the suction side surface (150) of the rotor blade tip (119) to the outside by means of the drainage hole (154), whereby
- a bore center axis (160) of the drainage hole (154) is inclined in such a way with respect to a pitch axis (164) of the rotor blade (110), that the bore center axis (160) runs from the direction of a surface on the pressure side (152) in the direction of the suction side surface (150) of the rotor blade tip (119), **characterized in that** the bore center axis (160) of the drainage hole (154) runs at a certain angle (162) with respect to the pitch axis (164) of the rotor blade in the direction of a tip side end (165) of the rotor blade tip (119).

2. Rotor blade (110) according to claim 1, wherein the drainage bore (154) is configured so as to be accessible only from said suction side (124).

3. Rotor blade (110) according to claim 1 or 2, wherein a pressure-side surface (152) of the rotor blade tip (119) is not opened by the drainage hole (154).

4. Rotor blade (110) according to one of the preceding claims, wherein a profile trailing edge (140) of the rotor blade tip (119) has a closed, continuous course.

5. Rotor blade (110) according to one of the preceding claims, wherein a profile leading edge (142) of the rotor blade tip (119) has a closed, continuous course.

6. Rotor blade (110) according to one of the preceding claims, wherein the drainage hole (154) in a straight extension of its bore center axis (160) is freely accessible from the outside.

7. Rotor blade (110) according to one of the preceding claims, wherein the suction-side surface (150) of the rotor blade tip (119) has a recess in the area of an outlet opening (158) of the drainage hole (154).

8. Rotor blade (110) according to claim 7, wherein the recess is formed in such a way that the drainage hole (154) is freely accessible from the outside in a straight extension of its bore center axis (160) of the drainage hole (154).

9. The rotor blade (110) according to claim 7 or 8, wherein the recess is formed in such a way that the suction-side surface (150) has a continuous contour in one direction perpendicular to the bore center axis (160).

10. Rotor blade (110) according to one of claims 1 to 9, wherein the predetermined angle is at an interval of 1° to 45°, preferably 1° to 15°.

11. Rotor blade (110) according to one of the previous claims, wherein a diameter (170) of the drainage hole (154) is between 1 mm and 20 mm, in particular 8 mm, 9 mm or 10 mm.

12. Rotor blade (110) according to one of the previous claims, wherein the rotor blade tip (119) is provided with a cover.

13. Rotor blade tip (119) for a rotor blade (110) of a wind turbine (100), wherein the rotor blade tip (119) is designed to be firmly attached to a rotor blade main body (111) of the rotor blade (110), and wherein the rotor blade tip (119) has a drainage hole (154) which is fluidically coupling with the rotor blade cavity (113) and is open to a suction-side surface (150) of the rotor blade tip (119), so that fluid can be discharged from the rotor blade cavity (113) on the suction side surface (150) of the rotor blade tip (119) to the outside by means of the drainage hole (154), whereby
- a bore middle axis (160) of the drainage hole (154) is inclined with respect to a pitch axis (164) of the rotor blade (110) in such a way that the bore center axis (160) runs from the direction of a surface on the pressure side (152) in the direction of the suction side surface (150) of the rotor blade tip (119), and
- the bore center axis (160) of the drainage hole (154) runs at a certain angle (162) with respect to the pitch axis (164) of the rotor blade in the direction of a tip side end (165) of the rotor blade tip (119).

## Revendications

1. Pale de rotor (110) pour une éolienne (100), présentant
- un corps principal de pale de rotor (111) qui délimite un espace creux de pale de rotor (113), et
- une pointe de pale de rotor (119) qui est reliée fermement au corps principal de pale de rotor (111), sachant que la pointe de pale de rotor (119) présente un alésage de drainage (154) qui est couplé fluidiquement avec l'espace creux de pale de rotor (113) et est ouvert vers une surface (150) côté aspiration de la pointe de pale de rotor (119) de telle sorte que du fluide puisse être évacué vers l'extérieur moyennant l'alésage de drainage (154) depuis l'espace creux de pale de rotor (113) au niveau de la surface (150) côté aspiration de la pointe de pale de rotor (119), sachant que
- un axe médian d'alésage (160) de l'alésage de drainage (154) est incliné par rapport à un axe d'incidence (164) de la pale de rotor (110) de telle manière que l'axe médian d'alésage (160) s'étende depuis une direction d'une surface (152) côté refoulement en direction de la surface (150) côté aspiration de la pointe de pale de rotor (119), **caractérisé en ce que** l'axe médian d'alésage (160) de l'alésage de drainage (154) s'étend selon un angle (162) déterminé par rapport à l'axe d'incidence (164) de la pale de rotor en direction d'une extrémité (165) côté pointe de la pointe de pale de rotor (119).

2. Pale de rotor (110) selon la revendication 1, sachant que l'alésage de drainage (154) est constitué de telle manière qu'il ne soit accessible que depuis le côté aspiration (124).

3. Pale de rotor (110) selon la revendication 1 ou 2, sachant qu'une surface (152) côté refoulement de la pointe de pale de rotor (119) n'est pas ouverte par l'alésage de drainage (154).

4. Pale de rotor (110) selon l'une des revendications précédentes, sachant qu'un bord d'extrémité de profil (140) de la pointe de pale de rotor (119) présente un tracé fermé continu.

5. Pale de rotor (110) selon l'une des revendications précédentes, sachant qu'un bord de nez de profil (142) de la pointe de pale de rotor (119) présente un tracé fermé continu.

6. Pale de rotor (110) selon l'une des revendications précédentes, sachant que l'alésage de drainage (154) est librement accessible de l'extérieur en prolongement droit de son axe médian d'alésage (160).

7. Pale de rotor (110) selon l'une des revendications précédentes, sachant que la surface (150) côté aspiration de la pointe de pale de rotor (119) présente un renfoncement dans la zone d'une ouverture d'évacuation (158) de l'alésage de drainage (154).

8. Pale de rotor (110) selon la revendication 7, sachant que le renfoncement est constitué de telle manière que l'alésage de drainage (154) soit librement accessible de l'extérieur en prolongement droit de son axe médian d'alésage (160) de l'alésage de drainage (154).

9. Pale de rotor (110) selon la revendication 7 ou 8, sachant que le renfoncement est constitué de telle manière que la surface (150) côté aspiration présente un tracé de contour continu dans une direction perpendiculaire à l'axe médian d'alésage (160).

10. Pale de rotor (110) selon l'une des revendications 1 à 9, sachant que l'angle prédéterminé est compris dans un intervalle de 1° à 45°, de préférence 1° à 15°.

11. Pale de rotor (110) selon l'une des revendications précédentes, sachant qu'un diamètre (170) de l'alésage de drainage (154) est compris entre 1 mm et 20 mm, en particulier est de 8 mm, 9 mm ou 10 mm.

12. Pale de rotor (110) selon l'une des revendications précédentes, sachant que la pointe de pale de rotor (119) est pourvue d'un diaphragme.

13. Pointe de pale de rotor (119) pour une pale de rotor (110) d'une éolienne (100), sachant que la pointe de pale de rotor (119) est constituée pour être reliée fermement à un corps principal de pale de rotor (111) de la pale de rotor (110), et sachant que la pointe de pale de rotor (119) présente un alésage de drainage (154) qui est apte à être couplé fluidiquement avec l'espace creux de pale de rotor (113) et est ouvert vers une surface (150) côté aspiration de la pointe de pale de rotor (119) de telle sorte que du fluide puisse être évacué vers l'extérieur moyennant l'alésage de drainage (154) depuis l'espace creux de pale de rotor (113) au niveau de la surface (150) côté aspiration de la pointe de pale de rotor (119), sachant que
- un axe médian d'alésage (160) de l'alésage de drainage (154) est incliné par rapport à un axe d'incidence (164) de la pale de rotor (110) de telle manière que l'axe médian d'alésage (160) s'étende depuis une direction d'une surface (152) côté refoulement en direction de la surface (150) côté aspiration de la pointe de pale de rotor (119), et
- l'axe médian d'alésage (160) de l'alésage de drainage (154) s'étend selon un angle (162) déterminé par rapport à l'axe d'incidence (164) de la pale de rotor en direction d'une extrémité (165) côté pointe de la pointe de pale de rotor (119).
